## Europäisches Patentamt
## European Patent Office
## Office européen des brevets

(19)

(11) Publication number: **0 011 393**
**B1**

(12)

# EUROPEAN PATENT SPECIFICATION

(45) Date of publication of patent specification: **22.12.82**

(51) Int. Cl.³: **C 08 F 240/00**

(21) Application number: **79302270.8**

(22) Date of filing: **19.10.79**

(54) Petroleum resins and their preparation.

(30) Priority: **20.10.78 GB 4146378**

(43) Date of publication of application:
**28.05.80 Bulletin 80/11**

(45) Publication of the grant of the patent:
**22.12.82 Bulletin 82/51**

(84) Designated Contracting States:
**BE DE FR GB IT NL SE**

(56) References cited:
**FR - A - 2 320 959**
**GB - A - 517 302**

**CHEMICAL ABSTRACTS, vol. 81, 18—11—
1974, no. 20, abstract 121745c Columbus,
Ohio, USA**

(73) Proprietor: **Exxon Research and Engineering
Company**
**P.O.Box 390 180 Park Avenue**
**Florham Park New Jersey 07932 (US)**

(72) Inventor: **Lepert, Andre**
**Avenue des Mouettes, 21**
**B-1640 Rhode Saint Genese (BE)**

(74) Representative: **Bawden, Peter Charles**
**Esso Chemical Research Centre PO Box 1**
**Abingdon**
**Oxfordshire OX13 6BB (GB)**

Courier Press, Leamington Spa, England.

Petroleum resins and their preparation

The present invention relates to new improved petroleum resins and a process for their production. In particular the invention relates to resins suitable as tackifiers for elastomers and useful in hot melt formulations.

Petroleum resins obtained by the polymerisation of $C_5$ dienes such as pentadiene 1,3 and/or isoprene are well known as is their use as tackifiers for elastomers and as components in hot melt formulations.

It is known that SIS block copolymers (block styrene-isoprene copolymers such as Shell Cariflex TR 1107) can be tackified by petroleum resins of narrow molecular weight distribution produced by controlling the polymerisation conditions with branched reactive olefins, substituted aromatics or tertiary alkyl halides, see for example GB—A—1538057 and 1537852. These previously described petroleum resins of narrow molecular weight distribution tackify oil extended random SBR (styrenebutadiene) copolymers and provide very good tackifying properties for the SIS block copolymers. However, they also have a low cohesive strength in pressure sensitive adhesives based on natural rubber. They do not however tackify oil free SBR elastomers of either random or block thermoplastic nature (e.g SBS block copolymers).

Other petroleum feed additives for example dicylopentadiene, methyl cyclopentadiene dimers or thermal polymers obtained from cyclodiene dimer, rich streams as described GB—A—1,486,211 are known as a means of making resins of high softening point. However the resins produced in this way have degradated resin Gardner colour and wax compatability. Moreover even if they increase the cohesive strength of pressure sensitive adhesives based on natural rubbers and slightly tackify SIS block copolymers they do not tackify other SBR copolymers.

One disadvantage of these earlier techniques is that the presence of the molecular weight controlling additive tends to reduce the softening point of the resin thus rendering it unsuitable for certain pressure sensitive adhesives particularly those where cohesive strength (shear adhesion) is important. It has been proposed to overcome this problem by carrying out the polymerisation in a paraffinic solvent which is not entirely satisfactory and increases costs and reduces plant capacity.

In our European Patent application 79 301215.4 we suggest that these disadvantages may be overcome by the copolymerisation of carene with the petroleum resin feed. We have now found that similar benefits may be obtained if limonene is used instead of carene.

U.S. 3,466,267 patent describes the manufacture of resins by spiking a concentrate of a mixture of limonene and carvestrene with 10 to 50 percent by weight of piperylene. According to this patent if less than 10 percent by weight of piperylene is used the resin has an undesirably low softening point whilst if more than 50 wt.% by weight of the resin is employed softening points are lowered and the resin yields from the polymerisation are uneconomically low, the ratio of limonene to carvestrene varies from 1:0.66 to about 1:10.

We have now found that a satisfactorily high resin softening point (70 to 160°C and preferably 100 to 130°C) resin is achieved when more than 50 wt.% by weight of piperylene based on the combined weight of any $C_5$ conjugated diolefine and limonene is combined with limonene without any need for carvestrene addition and that the resin yield is acceptable and has good colour stability. We have also found that the resin quality may be further improved when the limonene and piperylene or other $C_5$ conjugated diolefins such as isoprene is combined with branched olefins as transfer agents for resin molecular weight control.

The present invention therefore provides a process which comprises copolymerising using a Friedel Crafts catalyst (1) a petroleum resin feed comprising $C_5$ olefins and diolefins, $C_6$ olefins and diolefins or a mixture of $C_5$ and $C_6$ olefins and a diolefins, said feed being obtained from the cracking of petroleum feedstock and (2) a limonene rich stream the petroleum resin feed comprising at least 40 wt.% of the combined weight of limonene and resin feed in which from 50.1 to 99 wt.% of piperylene and/or isoprene based on the combined weight of any $C_5$ conjugated diolefin and limonene is present in the total feed.

The present invention further provides a process which comprises copolymerising using a Friedel Crafts catalyst (1) a petroleum resin feed comprising $C_5$ olefins and diolefins, $C_6$ olefins and diolefins or a mixture of $C_5$ and $C_6$ olefins and diolefins, said feed being obtained from the cracking of petroleum feedstocks and (2) limonene the petroleum resin feed comprising at least 40 wt.% of the combined weight of the petroleum resin feed and limonene.

The present invention further provides the petroleum resin prepared according to the processes described above.

The $C_5$ or $C_6$ diolefin and olefin containing feed used in our process may be obtained from the cracking of petroleum feedstock: Such feedstocks include naphthas, kerosene, gas oil and vacuum gas oil. These feedstocks usually boil in a range of from 20°C to 450°C.

The petroleum feedstock is cracked, preferably in the presence of steam, and the recommended cracking temperature is between 500° and 870°C. The product which contains unsaturated hydrocarbons usually boiling in the range of 20° to 240°C, preferably 20° to 130°C, usually is

2

thereafter subjected to fractionation to remove $C_2$ to $C_4$ light ends. The feedstock may thereafter be subjected to thermal soaking at a temperature of between 100°C and 160°C, preferably 120° to 140°C, e.g. about 130°C. The thermal soaking preferably takes 0.5 to 6 hours, e.g. 0.5 to 1 hour. Low temperatures are preferred in order to limit the cyclic diene (Cyclopentadiene and Methylcyclopentadiene) co-dimerization with $C_5$ linear conjugated dienes (isoprene and pentadienes 1,3 cis- and trans-). After fractionation and if carried out thermal soaking, the feedstock is preferably subjected to distillation to remove cyclic conjugated diolefins which are gel precursors (cyclopentadiene and methylcyclopentadiene being removed as dimers).

After distillation one obtains an overhead naphtha which usually boils in the range from 25 to 110°C, e.g. 25 to 80°C, the best results being achieved with a 25—70°C cut. This overhead naphtha comprises mainly $C_5$ diolefins such as isoprene and 1,3 cis- and trans- pentadienes, $C_5$ to $C_6$ monoolefins and aromatics for example benzene. In general the overhead naphthas have the following compositions:

|  | % by weight |
|---|---|
| Total paraffins | 1.0 to 41.5 |
| Total diolefins | 35.5 to 14.5 |
| Total olefins | 33.5 to 13.0 |
| Total aromatics | 30.0 to 31.0 |
| Isoprene | 16.5 to 0 |
| Pentadiene 1,3 | 15.5 to 4.5 |
| Cyclopentadiene | 1.0 to 2.5 |

the exact composition depending on the nature of the petroleum feedstock which is subjected to steam cracking.

The feed could be significantly isoprene free provided this compound is previously recovered through any conventional extraction process such as extractive distillation or azeotropic distillation. In such cases the properties of the resins produced are better than those obtained with isoprene-containing feeds. Moreover, depending on the final boiling point of the feed cut the feedstock could be substantially free of benzene. Cyclopentene contents are generally below 3 wt.%.

If thermal soaking has been carried out the cyclodiene dimers which are produced are generally not included in the feed to be polymerised, because they are detrimental to the specific properties of the resins. However, if required for special applications they can be left in the resin feed, the distillation step previously mentioned being carried out before the thermal soaking step.

In our preferred process 50.1 to 99 wt.% more preferably 50.1 to 85 wt.% of piperylene and/or isoprene based on the combined weight of $C_5$ conjugated diolefins and limonene should be used. The limonene used may be a concentrate obtained from gum or crude sulphate turpentine by rectification, such a concentrate generally contains from 50 to 85 wt.% of limonene. Two samples of a typical stream were found to contain:

| α-Pinene | 0.2 wt.% | 0.1 wt.% |
|---|---|---|
| Camphene | 0.1 wt.% | — |
| β-Pinene | 0.1 wt.% | — |
| Δ-3 Carene | 6.9 wt.% | 5.0 wt.% |
| α-Terpinene | 3.0 wt.% | 3.3 wt.% |
| p-Cymene | 5.5 wt.% | 5.1 wt.% |
| Limonene | 74.3 wt.% | 78.8 wt.% |
| γ-Terpinene | 1.1 wt.% | 1.1 wt.% |
| Terpinolene | 1.5 wt.% | 3.2 wt.% |

We found that the use of limonene narrows the molecular weight distribution of the resin at the same time increasing the softening point of the resin.

Other unsaturated cyclic monomers may also be included in the copolymerisation. For example one or more of norbornene, vinyl-norbornene, dicyclopentadiene, methyl cyclopentadiene dimer, vinyl cyclohexane, tetrahydroindene and other terpenes such as pinene may be included.

The techniques of the present invention are equally applicable to resin production process which employ agents or narrow the molecular weight distribution such as the branched reactive olefins of GB—A—1538057 to achieve extremely narrow distribution without reduction of softening point. Similarly the limonene may be incorporated into systems which uses a solvent to keep up softening points or the need for the solvent may be obviated by the use of the limonene. The ratios of the amount of limonene and petroleum resin feed to the amount of branched olefine used may be varied to obtain resins of any desired softening point within the range 60°C to 140°C. Where branched olefins are used a broad (e.g. $C_5$—$C_8$) fraction of GB—A—1538057 may be used. The preferred branched olefins are oligomers of propylene and butylenes obtained with phosphoric acid catalysts (called U.O.P. olefins) or

3

from a Fluid Catalytic Cracker (F.C.C. olefins) or from stream cracking. Typical compositions are shown in Tables 1 and 2.

Other chain transfer agents such as the alkyl halides of GB—A—1537852 may also be used.

Similarly oxygenated transfer agents may be used such as mono-, di- or tri-substituted phenols the substituent being a $C_1$ to $C_{30}$ or preferably $C_1$ to $C_6$ straight chain or branched chain hydrocarbyl group e.g. methyl, ethyl, propyl, butyl, amyl or their secondary or tertiary isomers, (e.g. 2,6 ditertiary-butyl-4-methyl phenol), alcohols, esters, dialkyl ethers, alkaryl ethers, the alkyl group in the ether being $C_1$ to $C_{30}$, preferably $C_1$ to $C_6$ straight or branched chain hydrocarbyl group e.g. methyl, ethyl, amyl or their secondary or tertiary isomers, (e.g. anisole), organic acids or anhydrides (e.g. maleic anhydride). When used the oxygenated transfer agent should preferably have a boiling point lower than 300°C. If low boiling point compounds e.g. diethyl ether, are used the polymerisation temperature and pressure should be carefully chosen so as to maintain them in the liquid state.

The most efficient compounds in the presence of $AlCl_3$ are dialkyl ethers or an alkaryl ether, such as anisole since they act as solvent for the catalysts. Since the polymerisation is usually carried out between 30 to 80°C, any such additive should be of adequate boiling point in order to maintain it in the liquid phase.

The amount of oxygenated compound used as transfer agent can vary from 0.1 to 5 wt.% preferably 0.5 to 2 wt.%, based on the weight of petroleum resin feed. They are generally less attractive than branched chain reactive aliphatic olefins previously described.

In addition $C_8$—$C_{10}$ polymerisable unsaturated aromatic monomers such as styrene, $\alpha$-methyl styrene, vinyl toluene, indene, methyl indene (see U.S. 4,078,132) may also be included in the polymerisation mixture which we find improves the compatibility of resin especially for use in hot melt applications. Styrene derivatives substituted by chlorine or a polar group, such as methoxy, are other potentially attractive monomers.

The resin feed and the limonene are mixed and polymerised using a Friedel Crafts catalyst, for example aluminium chloride, aluminium bromide or a liquid aluminium chloride/hydrochloric acid alkyl substituted aromatic hydrocarbon complex, the aromatic hydrocarbon being for example o-xylene, mesitylene, ethyl benzene, isopropyl benzene and other short or long chain alkyl benzenes. The alkyl chain can be linear or branched and can vary from 1 to 30 carbon atoms. The aromatic hydrocarbon may be mono- or polyalkylated for example diisopropyl benzene, para tertiary butyl benzene and similar compounds.

Acid liquid $AlCl_3$ sludges obtained as by-products during the alkylation of benzene or any other substituted aromatics (e.g. toluene or xylenes) with branched chain olefins can be directly used as catalyst for the above described polymerisation process. The branched chain olefins which are for example, produced via the boron trifluoride oligomerisation of propylene and/or butylene and fractionation, e.g. $C_{12}$ olefins or $C_{24}$ olefins, can be alkylated with aromatics producing *in situ* sludge. As an example the acidic sludge available from a dodecylbenzene plant provided similar results to the preformed o-xylene $AlCl_3$/HCl liquid complex.

These liquid complexes are slightly more efficient than $AlCl_3$ powder at equivalent concentration and provide slightly higher resin yields and lower resin molecular weight. Therefore, the amount of limonene required for narrowing the resin molecular weight is significantly reduced. Moreover when byproduct sludges are available in plant site, the catalyst cost is reduced and such a process is particularly attractive although powdered $AlCl_3$ results in resin having better Gardner colour.

The Friedel Crafts catalysts may also be dissolved in polar solvents, for example $AlCl_3$ or $AlBr_3$ may be dissolved in ethers such as diethyl ether or anisole acetates such as ethyl acetate, nitrobenzene, phenols, anhydrides and fatty acids. These catalyst solutions are however less preferred being generally less active; mixtures of those polar solvents and the aromatic or chlorinated solvents may also be used.

In the polymerisation process the amount of catalyst may vary from 0.25 to 3.0 wt.% preferably 0.5 to 1.5 wt.% based on the weight of the mixture to be polymerised. The optimum concentration depends on the nature of the solvent which affects the solubility of the catalyst as well as on the stirring efficiency inside the polymerisation reactor. High catalyst concentration reduces the resin molecular weight distribution and therefore limits the amount of limonene required for controlling the resin molecular weight.

Other Friedel Crafts catalysts like titanium tri- or tetrachloride, tin tetrachloride, boron trifluoride, boron trifluoride complexes with organic ethers, phenols or acids can also be used but they lead to rather low resin yields and large quantities of liquid oligomers of low value are obtained. Even though these oily oligomers can be upgraded as reactive plasticizer or liquid plasticizer such catalysts are not recommended. Other possible catalysts can be acidic clays.

Usual polymerisation temperatures are between −20°C and 100°C, preferably between 30° and 80°C.

After polymerisation the residual catalyst may be removed by for example, washing with aqueous solution of alkali, ammonia or sodium carbonate, or by the addition of an alcohol such as methanol and subsequent filtration.

The final resin may be stripped of unreacted hydrocarbons ("raffinate" rich in benzene and/or paraffins/unreactive olefins) and low molecular weight oil oligomers by stream stripping or vacuum

**0011393**

distillation. The finished product is a substantially non-aromatic unsaturated thermoplastic hydrocarbon resin. It usually has a softening point of from 70°C to 160°C, preferably 100° to 130°C.

The resins obtained can be used in many applications which require low viscosity, good flexibility and elongation before or especially after chemical modification with polar compounds such as phenols, unsaturated anhydrides such as maleic anhydride or unsaturated acids (e.g. fumaric acid). These resins are designed for a wide range of end uses and applications. They can be applied to paper, metal, thermoplastic films (cellophane, polyesters, PVC, woven or non woven fabrics, glass etc. and for bonding such materials together). Typical application are hot melts, carpet backing, coating with drying oil formulations, book binding, paper sizing or in any applications involving natural or synthetic resins and/or rubbers such as caulks, sealants or ruuber tackification. More especially they may be used as tackifiers with natural rubber or synthetic rubbers such as polyisoprene. EPDM, butyl, chlorobutyl, bromobutyl, neoprene and block copolymers for example styrene/isoprene rubber (Shell Cariflex TR 1107) mixtures of such rubbers. Even though these resins are significantly non-aromatic they provide outstanding tackiness with such elastomers and high resin/rubber ratio can be used to reducing the adhesive formulation cost (the resin being significantly cheaper than the block thermoplastic styrene/isoprene/styrene rubber).

Other applications involving such resin properties are pressure sensitive adhesives, hot melt adhesives, low temperature adhesives, label adhesives, latex adhesives, surgical tapes and masking tapes where they may be blended with polymers such as ethylene/vinyl acetate copolymers optionally blended with wax.

Thus, hot melt adhesives and latex adhesives can be prepared from styrene-isoprene block copolymers and a tackifying resin. The low softening point aliphatic petroleum resins are a replacement for aromatic resins or resin and terpene derivatives.

The present invention is illustrated but in no way limited by reference to the following examples.

Example 1

The limonene rich stream described above, a piperylene rich stream comprising:

| | |
|---|---|
| Pentadiene 1:3 Trans | 48.5 wt.% |
| Pentadiene 1:3 Cis | 23.6 wt.% |
| Cyclopentene | 17.5 wt.% |
| Cyclopentane | 8.1 wt.% |
| Others (Paraffins/olefins etc) | 2.3 wt.% |

and/or a fluid catalytic cracker olefine stream of Final Boiling Point 100°C containing:

33.90 wt.% Paraffins
0.33 wt.% diolefines
58.40 wt.% olefins
0.11 wt.% aromatics
Total C4 17.15 wt.%

were fed to a 2 litre glass reactor in the ratios given in Table 1 below. The reactor was fitted with a mechanical stirrer, a cooler and catalyst injection device. 1 wt.% of powdered $AlCl_3$ as catalyst based on the total weight of the feed was injected into the reactor which was then held at 50°C for 90 minutes. The solvent used contained:

99.44 wt.% paraffins
0.50 wt.% aromatics
0.06 wt.% unknown

and contained 10 parts per million of sulphur.

The properties of the resins obtained are also given in Table 3.

Example 2

The effect of the presence of both limonene and fluid catalytic cracked olefins on the softening point and the molecular weight distribution with and without the paraffinic solvent was assessed using the reactor used in Example 1. The pentadiene 1:3 feed consisted of:

| | |
|---|---|
| Pentadiene 1:3 Trans | 42.7 wt.% |
| Pentadiene 1:3 Cis | 24.2 wt.% |
| Cyclopentene | 17.5 wt.% |
| Cyclopentane | 8.5 wt.% |
| Others | 7.1 wt.% |

5

and the polymerisation conditions were as in Example 1. The results are shown in the following Table 4, together with the properties of the products obtained (same test methods as in Example 1).

Example 3

For comparison purpose the effect of Limonene and Δ-3 Carene are shown respectively in Table 5 and 6. The pentadiene 1,3 feed composition and the polymerisation conditions were those of Examples 1 and 2.

Table 6 shows that the resins produced according to the present invention exhibit excellent tackifying properties for both natural and thermoplastic block copolymers such as Shell Cariflex (Registered Trade Mark) TR 1107.

The composition of Δ-3 Carene is shown in Table 7.

Example 4

In this example the piperylene rich stream is replaced by a conventional $C_5$ petroleum resin feed containing both isoprene and piperylene (composition described in Table 8) and the relative effect of spiking such a feed with Limonene is compared with those of commercially available streams like dipentene, $\alpha$ and $\beta$-Pinene, (composition shown in Table 9).

Resins properties are described in Table 10.

Since $\beta$-pinene is the main component in the manufacturing process of polyterpene resins its use is shown for comparative purpose. Its impact on resin softening point is very pronounced but it leads to higher molecular weight than limonene and Carene.

TABLE 1

Composition of $C_5$—$C_8$ U.O.P. olefin additives

Gas chromatography analysis (after hydrogenation)

| | | | |
|---|---|---|---|
| $<C_5'$ | 3.39 | 12.67 | 11.03 |
| $C_5'$s: | 4.73 | 6.94 | 12.34 |
| $C_6'$s: | 25.70 | 37.61 | 32.55 |
| $C_7'$s: | 24.78 | 29.71 | 20.60 |
| $C_8'$s: | 35.50 | 12.48 | 23.02 |
| $C_9'$s | 0.78 | 0.78 | 0.41 |
| $C_9'$s and higher | 4.34 | 0.46 | |
| REID Vapor pressure (ASTM d 323) | | | |
| at 20°C | 0.39 bar | 0.55 bar | 0.57 bar |
| at 33°C | 0.75 bar | 1.08 | 1.07 |
| Bromine number Br/100 g | 125 | 84 | 74 |
| Sulfur (ppm) | 6 | 10 | 5 |
| Mercaptans (ppm) | 1 | | |
| Ultra-violet fluorescene indicator analysis | | | |
| Olefins vol.% | 80 | 56 | 40 |
| Paraffins vol.% | 20 | 44 | 60 |
| Paraffins content (wt.%) | | | |
| After olefin absorption with mercuric perchlorate | | 43.7 | 52.3 |

TABLE 2

Gas chromatographic analysis of fluid catalytic cracked olefin fraction

| | | | |
|---|---|---|---|
| Overall composition (wt.%) | | | |
| Total paraffins | 33.90 | 35.07 | 35.33 |
| Total diolefins | 0.33 | 0.32 | 0.90 |
| Total olefins | 58.40 | 56.43 | 59.13 |
| Total aromatics | 0.11 | 0.50 | 2.31 |
| Unidentified | 7.26 | 7.68 | 2.33 |
| Specified gravity at 15°C | 0.6457 | 0.6614 | 0.6801 |
| Olefin fraction | | | |
| Boiling Range °C | 25—50 | 25—70 | 25—100 |
| $C_4'$s | 16.09 | 11.04 | 7.09 |
| $C_5'$s | 38.25 | 28.33 | 19.78 |
| $C_6'$s | 5.37 | 20.18 | 32.01 |

6

TABLE 3

| Feed composition | | | | |
|---|---|---|---|---|
| Limonene concentrate (wt.%) | 40 | 33 | 26 | 33 |
| Solvent (wt.%) | 30 | 35 | 35 | 17 |
| Benzene (wt.%) | 30 | — | — | — |
| Pentadiene 1:3 concentrate (wt.%) | | 32 | 39 | 32 |
| Fluid cat cracker olefine (wt.%) | | — | — | 18 |
| Limonene in total feed (wt.%) | 29.7 | 24.1 | 19.3 | 24.5 |
| Pentadiene in total feed (wt.%) | | 23.0 | 28.1 | 23.0 |
| Pentadiene on combined Pentadiene+Limonene (based on exact concentration in feed) | | 48.8 | 59.3 | 48.4 |
| | | | | |
| Product | | | | |
| Resin (wt.%) | 6.2 | 43.6 | 42.6 | 47.8 |
| Liquid oligomers (wt.%) | 13.2 | 8.6 | 5.6 | 11.6 |
| Unreacted compounds (wt.%) | 80.6 | 47.8 | 51.8 | 40.6 |
| | | | | |
| Product properties | | | | |
| Resin softening point ASTM E-28 (°C) | 115 | 144 | 146 | 124 |
| Gardner color ASTM D-1544 | 11 | 2+ | 3— | 3 |
| Heat stability (colour after 16 hrs at 150°C) | 13.5 | 10 | 7 | 12+ |
| Wax cloud point °C | | | | |
| Wax/resin/EVA* | | | | |
| 50:25:25 | 70 | 250+ | 250+ | 83 |
| Molecular wt. G.P.C. | | | | |
| $\overline{M}n$ | | 1735 | | 1370 |
| $\overline{M}w$ | | 10920 | | 4330 |
| $\overline{M}w/\overline{M}n$ | | 6.23 | | 3.16 |
| | | | | |
| Pressure sensitive adhesive properties | | | | |
| (Resin: Natural rubber=50:50 wt.) | | | | |
| 180° peel strength (PSTC-1**) | | | | |
| (lbs/inch) | 3.0 | 2.6 | 2.1 | 2.8 |
| (Kg/cm) | (0.54) | (0.46) | (0.37) | (0.50) |
| Polyken tack (grams) ASTM D-2979 | 1100 | 300 | 300 | 1050 |
| Tack rolling ball (cm) PSTC-6 | 2 | 30+ | 30+ | 4.5 |
| 178° Holding power PSTC-7 (hours to failure) | 27 | 500 | 500 | 131 |

\* Ethylene/vinyl acetate copolymer containing 28 wt.% vinyl acetate and of melt index 12—18
\* Wax having a melting point of 65°C
\*\* Pressure sensitive tape council test method.

TABLE 4

| Feed composition | | | | | |
|---|---|---|---|---|---|
| Limonene concentrate (wt.%) | — | — | 20 | 20 | 33 |
| Solvent (wt.%) | 30 | — | — | — | 17 |
| F.C.C. olefins (wt.%) | 41 | 58 | 40 | 48 | 18 |
| Pentadiene 1,3 concentrate (wt.%) | 29 | 42 | 40 | 32 | 32 |
| Limonene in total feed (wt.%) | — | — | 14.9 | 14.9 | 24.3 |
| Pentadiene in total feed (wt.%) | 19.4 | 28.0 | 28.8 | 23.0 | 23.0 |
| | | | | | |
| Product | | | | | |
| Resin (wt.%) | 27.8 | 40.0 | 49.4 | 42.0 | 47.4 |
| Liquid oligomers (wt.%) | 5.2 | 6.3 | 11.2 | 15.4 | 11.6 |
| Unreacted compounds (wt.%) | 67.0 | 53.7 | 39.4 | 36.6 | 40.0 |
| | | | | | |
| Product properties | | | | | |
| Softening point | 100 | 93 | 112 | 113 | 124 |
| Gardner colour | 4— | 3+ | 3.5 | 3.5 | 3 |
| Heat stability | 14 | 13.5 | 13.5 | 12— | 12+ |
| Molecular Wt $\overline{M}n$ | 1350 | 1295 | 1420 | | 1370 |
| $\overline{M}w$ | 2990 | 2350 | 4205 | | 4330 |
| $\overline{M}w/\overline{M}n$ | 2.21 | 1.81 | 2.96 | | 3.16 |
| Wax cloud point °C | | | | | |
| 50:25:25 | 72 | 70 | 76 | 69 | 83 |

0011393

TABLE 4 (cont.)

| | | | | | |
|---|---|---|---|---|---|
| 180° Peel strength (lb/inch) | 2.1 | 2.2 | 2.3 | 2.3 | 2.8 |
| (Kg/cm) | (0.37) | (0.39) | (0.41) | (0.41) | (0.50) |
| Polyken tack (grams) | 950 | 870 | 950 | 1000 | 1050 |
| Tack rolling ball (cm) | 2 | 1 | 2.5 | 2.5 | 4.5 |
| 170° Holding power | 62 | 27 | 123 | 53 | 131 |

TABLE 5
Comparison of carene and limonene

| | | | |
|---|---|---|---|
| Feed composition | | | |
| Carene concentrate (wt.%) | 20 | 25 | — |
| Solvent (wt.%) | 40 | 37.5 | 37.5 |
| Limonene (wt.%) | — | — | 25 |
| Pentadiene 1,3 concentrate (wt.%) | 20 | 25 | 25 |
| Fluid cat cracker olefine (wt.%) | 20 | 12.5 | 12.5 |
| Carene in total feed (wt.%) | 16.8 | 20.9 | 1.2 |
| Limonene in total feed (wt.%) | — | — | 19.7 |
| Pentadiene in total feed (wt.%) | 14.4 | 18.0 | 18.0 |
| | | | |
| Product | | | |
| Resin (wt.%) | 27.2 | 33.4 | 35.2 |
| Liquid oligomers (wt.%) | 10.4 | 11.8 | 10.8 |
| Unreacted compounds (wt.%) | 62.4 | 54.8 | 54.0 |
| | | | |
| Product properties | | | |
| Resin softening point ASTM E-28°C | 112 | 112 | 108 |
| Gardner colour ASTM D-1544 | 3.5 | 3.5 | 4.5 |
| Heat stability (colour after 16 hrs at 150°C) | 12.5 | 11 | 12.5 |
| Wax cloud point °C | | | |
| Wax/resin/EVA* | | | |
| 50:25:25 | 68 | 68 | 68 |
| 40:40:20 | 86 | 84 | 80 |
| Molecular wt. G.P.C. | | | |
| $\overline{Mn}$ | | 1190 | |
| $\overline{Mw}$ | | 2265 | |
| $\overline{Mw}/\overline{Mn}$ | | 1.907 | |
| | | | |
| Pressure sensitive adhesive properties | | | |
| (resin: Natural rubber=50:50 wt.) | | | |
| 180° Peel strength (PSTC-1**) | | | |
| (lbs/inch) | 2.95 | 3.10 | 2.85 |
| (Kg/cm) | (0.53) | (0.55) | (0.51) |
| Polyken tack (grams) ASTM D-2979 | 1150 | 1300 | 1100 |
| Tack rolling ball (cm) PSTC-6 | 1.5 | 1.5 | 2 |
| 178° Holding power PSTC-7 (hours to failure) | 23 | 18 | 42 |

* Ethylene/vinyl Acetate copolymer containing 28 wt.% vinyl acetate and of Melt Index 12—18
* Wax having a melting point of —65°C
** Pressure sensitive Tape Council Test Method.

TABLE 6
Comparison of limonene and Δ3 carene

| | | |
|---|---|---|
| Feed composition | | |
| Limonene concentrate (wt.%) | 12.5 | — |
| Carene concentrate (wt.%) | — | 12.5 |
| F.C.C. olefines (wt.%) | 51.0 | 51.0 |
| Pentadiene 1,3 concentrate (wt.%) | 36.5 | 36.5 |
| Limonene in total feed (wt.%) | 9.8 | 0.9 |
| Carene in total feed (wt.%) | 0.6 | 10.5 |
| Pentadiene in total feed (wt.%) | 24.4 | 24.4 |
| | | |
| Product | | |
| Resin (wt.%) | 41.2 | 39.8 |
| Liquid oligomers (wt.%) | 10.4 | 10.0 |
| Unreacted compounds (wt.%) | 48.4 | 60.2 |

8

### TABLE 6 (cont.)
#### Comparison of limonene and Δ3 carene

| Product properties | | | |
|---|---|---|---|
| Softening point | | 98 | 100 |
| Gardner colour | | 4– | 4– |
| Heat stability | | 14 | 14.5 |
| Molecular Wt. $\overline{Mn}$ | | 1145 | 1285 |
| $\overline{Mw}$ | | 2150 | 2400 |
| $\overline{Mw}/\overline{Mn}$ | | 1.87 | 1.86 |
| Wax cloud point °C | | | |
| 50:25:25 | | <68 | <68 |
| 40:40:20 | | 75 | 88 |

| Pressure sensitive adhesive properties (Resin/Rubber ratio 50/50 wt.%) | | | | |
|---|---|---|---|---|
| Rubber type | NR[1] | TR 1107[2] | NR[1] | TR 1107[2] |
| 180° Peel strength (lb/inch) | 2.65 | 5.5 | 2.45 | 6.0 |
| (Kg/cm) | (0.47) | (0.98) | (0.44) | (1.07) |
| Polyken tack (grams) | 1100 | 1600 | 1150 | 1600 |
| Tack rolling ball (cm) | 1.5 | 2 | 1.5 | 2.5 |
| 178° Holding power | 46 | 500+ | 64 | 500+ |

[1] Natural Rubber 65 Mooney Viscosity
[2] Shell block copolymer TR 1107 (styrene—isoprene—styrene)

### TABLE 7
#### Δ-3 Carene concentrate (typical) by gas chromatography

| | |
|---|---|
| β-Pinene | 1.8 |
| Δ-3 Carene | 83.9 |
| α-Terpinene | 0.5 |
| p-Cymene | 1.7 |
| Limonene | 7.4 |
| Terpinolene | 0.6 |
| Unidentified | Difference to 100.0 |

### TABLE 8
#### Typical composition of a steam cracked petroleum feedstock boiling point °C (25—70) by gas chromatography

| Overall composition | | |
|---|---|---|
| Paraffins | 2.1 | |
| $C_5$ to $C_6$ conjugated diolefins | 50.0 | |
| $C_5$ to $C_6$ olefins | 43.8 | |
| Benzene | 3.4 | |

| Typical $C_5$ diolefins | | |
|---|---|---|
| Isoprene | 23.7 | |
| Pentadiene 1,3 trans | 11.8 | 19.7 |
| Pentadiene 1,3 cis | 7.9 | |
| Cyclopentadiene | 1.8 | |

| Typical $C_5$ olefins | |
|---|---|
| 2 Methyl butene 1 | 8.5 |
| 2 Methyl butene 2 | 6.4 |
| Pentene 1 | 7.4 |
| Cyclopentene | 4.8 |

**0011393**

### TABLE 9
Typical composition of commercial dipentene and terpenes stream by gas chromatography

| Product source | Dipentene A | Dipentene B | α-Pinene | β-Pinene | Dipentene gum turpentine |
|---|---|---|---|---|---|
| | | Sulfate turpentine | | | |
| α-Pinene | 0.10 | 3.9 | 95.6 | 1.5 | 1.7 |
| Camphene | 6.7 | 2.9 | 1.6 | 0.5 | 6.2 |
| β-Pinene | — | 0.6 | 2.0 | 92.4 | 0.1 |
| Carene | 0.2 | 0.4 | | 1.0 | 1.1 |
| α-Terpinene | 7.0 | 6.4 | | | 18.7 |
| p-Cymene | 1.4 | 13.8 | | 0.1 | 1.9 |
| Limonene | 41.6 | 29.6 | | 0.7 | 22.1 |
| γ-Terpinene | 6.5 | 2.2 | | | 9.7 |
| Terpinolene | 28.4 | 22.7 | | | 29.4 |
| 2-3,8 Menthadiene | 3.1 | 1.3 | | | 5.8 |
| Carbonyl number (ppm) | 360 | 770 | 54 | 115 | 186 |

### TABLE 10
Composition of terpenes as petroleum resin feed additives

| Feed composition (wt.%) | | | | | | |
|---|---|---|---|---|---|---|
| Steam cracker feed (IBP-70°C cut) | 40 | 40 | 40 | 40 | 40 | 40 |
| Paraffinic solvent L.V.N. | 30 | 30 | 30 | 30 | 30 | 30 |
| F.C.C. Olefins (IBP-100°C cut) | 30 | 20 | 20 | 20 | 20 | 20 |
| Carene | — | 10 | — | — | — | — |
| Limonene | — | — | 10 | — | — | — |
| Dipentene A | — | — | — | 10 | — | — |
| α-Pinene | — | — | — | — | 10 | — |
| β-Pinene | — | — | — | — | — | 10 |
| Pentadiene 1,3 in total feed | 7.9 | 7.9 | 7.9 | 7.9 | 7.9 | 7.9 |
| Isoprene in total feed | 9.5 | 9.5 | 9.5 | 9.5 | 9.5 | 9.5 |
| Carene in total feed | — | 8.4 | 0.5 | — | — | — |
| Limonene in total feed | — | 0.7 | 7.9 | 4.2 | — | — |
| α-Pinene in feed | | | | | 9.6 | 0.1 |
| β-Pinene in feed | | | | | | 9.2 |

### TABLE 10 (Cont'd)
Resin properties

| Product | | | | | | |
|---|---|---|---|---|---|---|
| Resin (wt.) | 23.6 | 29.0 | 31.0 | 29.1 | 27.2 | 36.4 |
| Liquid oligomers (wt.%) | 6.0 | 8.7 | 9.0 | 9.9 | 7.7 | 5.9 |
| Unreacted compounds (wt.%) | 70.4 | 61.6 | 60.0 | 61.0 | 65.1 | 57.7 |
| **Product properties** | | | | | | |
| Softening point | 93 | 97 | 99 | 95 | 93 | 103 |
| Gardner colour | 3 | 2.5 | 4 | 3.5 | 3.5 | 3.5 |
| Heat stability | 13+ | 13— | 13— | 12.5 | 13 | 13+ |
| Molecular Wt $\overline{Mn}$ | 1435 | 1345 | 1300 | 1900 | | 1470 |
| $\overline{Mw}$ | 3010 | 3585 | 3170 | 2535 | | 4805 |
| $\overline{Mw}/\overline{Mn}$ | 2.19 | 2.66 | 2.48 | 2.13 | | 3.26 |
| Wax cloud point °C | | | | | | |
| 50:25:25 | 80 | 76 | 73 | 68 | 105 | 124 |
| 40:40:20 | 120 | 115 | | 84 | 142 | |
| 180° Peel strength (lb/inch) | 2.35 | 2.45 | 2.55 | 2.30 | 2.25 | 2.9 |
| (Kg/cm) | (0.42) | (0.44) | (0.46) | (0.41) | (0.40) | (0.51) |
| Polyken tack (grams) | 850 | 1000 | 1100 | 950 | 1000 | 1050 |
| Tack rolling ball (cm) | 4 | 1.5 | 3 | 1.5 | 3 | 9 |
| 178° Holding power | | 35 | 36 | 14 | 16 | 95 |

## Claims

1. Process comprising copolymerising using a Friedel Crafts catalyst
(1) a petroleum resin feed comprising $C_5$ olefins and diolefins, $C_6$ olefins and diolefins or a mixture of $C_5$ and $C_6$ olefins and diolefins said feed being obtained from the cracking of petroleum feedstock and
(2) a limonene rich stream; the petroleum resin feed comprising at least 40 wt.% of the combined weight of limonene and resin feed in which from 50.1 to 99 wt.% of piperylene and/or isoprene based on the combined weight of any $C_5$ conjugated diolefin and limonene is present in the total feed.

2. A process according to claim 1 wherein the polymerisation feed also contains branched $C_5$—$C_8$ olefinic fraction of oligomers of propylene and butylene obtained with phosphoric acid catalyst or from a fluid catalytic cracker or from steam cracking or mono, di- or tri-substituted phenols wherein the substituent is a straight or a branched hydrocarbyl group of 1 to 30 carbon atoms.

3. A process according to preceding claim 1 or claim 2 wherein the feed also contains unsaturated $C_8$—$C_{10}$ aromatics such as styrene, $\alpha$-methyl styrene, vinyl toluene, indene and methyl indene.

4. A process according to any of the preceding claims in which other unsaturated cyclic monomers are included in the copolymerisation.

## Patentansprüche

1. Verfahren, bei dem unter Verwendung eines Friedel Crafts Katalysators (1) ein Petrolharzeinsatzprodukt, das $C_5$-Olefine und -Diolefine, $C_6$-Olefine und -Diolefine oder eine Mischung von $C_5$- und $C_6$-Olefinen und -Diolefinen enthält und durch Cracken eines Erdöleinsatzproduktes erhalten worden ist, und (2) ein Strom, der reich an Limonen ist, copolymerisiert werden, wobei das Petrolharzeinsatzprodukt mindestens 40 Gew.% des kombinierten Gewichtes von Limonen und Harzeinsatzprodukt ausmacht und wobei bezogen auf das kombinierte Gewicht jeglichen konjugierten $C_5$-Diolefins und Limonen im Gesamteinsatzmaterial 50,1 bis 99 Gew.% Piperylen und/oder Isopren vorhanden sind.

2. Verfahren nach Anspruch 1, dadurch gekennzeichnet, daß das Polymerisationseinsatzmaterial auch eine verzweigte olefinische $C_5$—$C_8$-Fraktion von Oligomeren von Propylene und Butylen erhalten mit Phosphorsäurekatalysator oder aus einer Fließkatalysator-Crackanlage oder aus einer Dampfcrackung oder mono-, di- oder trisubstituierte Phenole wobei der Substituent eine geradkettige oder verzweigtkettige Hydrocarbylgruppe mit 1 bis 30 Kohlenstoffatomen ist, enthält.

3. Verfahren nach Anspruch 1 oder 2, dadurch gekennzeichnet, daß das Einsatzmaterial auch ungesättige $C_8$—$C_{10}$-Aromaten wie Styrol, $\alpha$-Methylstyrol, Vinyltoluol, Inden und Methylinden enthält.

4. Verfahren nach jedem der vorangegangenen Ansprüche, dadurch gekennzeichnet, daß andere ungesättigte zyklische Monomere bei der Copolymerisatin mitverwendet werden.

## Revendications

1. Procédé consistant à copolymériser au moyen d'un catalyseur de Friedel-Crafts
(1) une charge de résine de pétrole comprenant des oléfines et des dioléfines en $C_5$, des oléfines et des dioléfines en $C_6$ ou un mélange d'oléfines et de dioléfines en $C_5$ et $C_6$, ladite charge provenant du craquage d'une matière première dérivée du pétrole et
(2) un produit riche en limonène, la charge de résine de pétrole représentant au moins 40% en poids du poids total de limonène et de charge de résine, une proportion de 50,1 à 99% en poids de pipérylène et/ou d'isoprène sur la base du poids total de toute dioléfine conjuguée en $C_5$ et de limonène étant présente dans la charge totale.

2. Procédé suivant la revendication 1, dans lequel la charge de polymérisation contient également une fraction oléfinique ramifiée en $C_5$ à $C_8$ d'oligomères de propylène et de butylène obtenue avec un catalyseur à l'acide phosphorique ou provenant d'un appareil de craquage catalytique fluide ou provenant d'un craquage à la vapeur de phénols mono- di- ou tri-substitués, le substituant étant un groupe hydrocarbyle à chaîne droite ou chaîne ramifiée ayant 1 à 30 atomes de carbone.

3. Procédé suivant la revendication 1 ou 2 précédente, dans lequel la charge contient également des aromatiques en $C_8$ à $C_{10}$ non saturés tels que styrène, $\alpha$-méthylstyrène, vinyltoluène, indène et méthylindène.

4. Procédé suivant l'une quelconque des revendications précédentes, dans lequel d'autres monomères cycliques non saturés sont inclus dans la copolymérisation.

11